# FASCICULE DE BREVET EUROPEEN

(11) **EP 1 542 828 B1**
(45) Date de publication et mention de la délivrance du brevet: **20.12.2006**
(21) Numéro de dépôt: 03772384.8
(22) Date de dépôt: 25.09.2003
(51) Int. Cl.: B23K 28/02, B23K 26/14

(54) **Installation de soudage hybride en chanfreins étroits**
Vorrichtung zum engspal-hybridschweissen
Hybrid welding installation for narrow chamfers

(30) Priorité: 26.09.2002 FR 0211905
(43) Date de publication de la demande: 22.06.2005
(73) Titulaire: COMMISSARIAT A L'ENERGIE ATOMIQUE, 75015 Paris (FR)
(72) Inventeur: DE DINECHIN, Guillaume, F-92130 Issy les Moulineaux (FR); ALFILLE, Jean-Pascal, F-92140 Clamart (FR); DE BORDAS, Gaspard, F-30800 Saint-Gilles (FR); AUBERT, Philippe, F-75016 Paris (FR)
(74) Mandataire: Poulin, Gérard
(86) Numéro de dépôt international: PCT/FR2003/002825
(87) Numéro de publication internationale: WO 2004/028736

(56) Documents cités:
- DE-C- 10 017 845
- US-A- 4 038 108
- US-A1- 2003 038 120

## Description

Le sujet de cette invention est une installation de soudage conçue pour opérer dans des joints à chanfreins étroits conformément au préambule de la revendication 1 (voir DE-C1-100 17 845).

Quand deux pièces de forte épaisseur doivent être unies par soudage, il est usuel de les creuser à leurs faces de jonction et de les assembler en formant un sillon appelé chanfrein qui s'étend sur la plus grande partie de leur épaisseur. Le soudage s'effectue par passes successives à chacune desquelles une couche de métal d'apport est déposée afin de combler peu à peu le chanfrein.

On rencontre en pratique des chanfreins larges et des chanfreins étroits, ceux-ci ayant typiquement une demi-ouverture qui, rapportée à la profondeur, correspond à une inclinaison de 8° au plus par rapport à la verticale. Les chanfreins étroits seraient préférables puisqu'ils nécessitent moins de métal d'apport pour les combler. Leur emploi s'est cependant heurté à des difficultés à les souder : certains procédés traditionnels de soudage, comme le soudage TIG (Tungsten Inert Gas), sont lents (leur vitesse d'avance est d'environ 10cm/min) et conviennent donc mal aux impératifs de productivité dans un procédé aux passes multiples, et le soudage avec électrode fusible sous flux de poudre est assez rapide mais limité à des joints horizontaux en raison du gros volume du bain fondu. On doit aussi mentionner les procédés MIG (Metal inert Gas) ou MAG (Metal Active Gas), rapides eux aussi mais dont la morphologie du bain fondu peut être à l'origine de défauts de soudage. Le problème alors rencontré est identifié dans le brevet US 4,891,494 A : les cordons de soudure déposés successivement peuvent révéler des interstices sur les côtés de leurs jonctions, là où ils se raccordent aux pièces à unir, ce qui affecte la qualité de la soudure. La solution préconisée dans ce brevet est de remplacer le fil traditionnellement droit de métal d'apport par un fil plié en zigzag et dont le bout est dirigé par le guide-fil alternativement d'un côté et de l'autre du chanfrein, pour y concentrer la chaleur et la matière fondue et ainsi remédier au défaut de soudage sur les côtés.

Il n'est cependant pas certain qu'un résultat satisfaisant puisse toujours être obtenu, car le déplacement de la chaleur vers un côté ou l'autre du chanfrein diminue l'échauffement du côté opposé, et peut donc y accentuer les mêmes défauts. Un mécanisme complexe est par ailleurs nécessaire à la mise en forme du fil.

L'invention repose sur l'idée, pour appliquer convenablement des soudages d'un genre MIG ou MAG aux chanfreins étroits, d'augmenter les dimensions du bain fondu par un apport de chaleur supplémentaire contrôlé, redevable à un laser focalisé à la surface du joint au fond du chanfrein. La productivité de l'opération de soudage est fortement augmentée par rapport aux techniques actuelles.

DE-C1-100 17 845 décrit une tête possédant aussi une forme allongée dans les directions longitudianle et de profondeur de sorte qu'elle peut aussi pénétrer dans un joint à chanfrein (§ 24-25). Cette tête présente aussi deux perçages et un conduit d'éjection de gaz, couplé avec le perçage recevant l'électrode. Un deuxième trou d'éjection de gaz, situé devant dans la direction longitudinale de la tête n'est pas décrit, ce qui ne permet donc pas de garantir que toute l'étendue de la zone fondue soit correctement couverte lors des opérations de soudage. US-A-4 938 108 décrit un procédé de découpe au laser avec une tête de découpe ne possédant point les conduits d'éjection de gaz avec leur chambre respective, ces chambres étant situées devant et derrière les perçages dans la direction longitudinale de ladite tête. EP-A-1 013 372 décrit une tête de soudage laser avec uniquement un fil utilisé comme métal d'apport. Dans ce cas aussi, les conduits et les chambres associées ne sont pas décrites.

Selon l'invention, il est proposé une installation de soudage pour réaliser un joint à chanfrein comprenant un laser émettant un faisceau, un film de métal d'apport et une électrode en guide-fil, comprenant une tête apte à pénétrer dans le chanfrein, cette tête étant allongée dans les directions longitudinales et de profondeur du chanfrein et étroite dans une direction transversale du chanfrein, cette tête comprenant deux perçages centraux traversant ladite tête essentiellement dans la direction de profondeur et convergeant l'un vers l'autre sous la tête, l'un des perçages étant aligné, durant l'utilisation de l'installation, avec le faisceau délivré par le laser et l'autre des perçages recevant l'électrode de sorte que le fil arrive sensiblement dans l'axe du faisceau laser, et deux conduits d'éjection d'un gaz de protection traversant la tête et aboutissant dans des chambres, ces chambres étant situées devant et derrière les perçages centraux dans la direction longitudinale et étant assez allongées dans cette direction pour couvrir toute l'étendue du bain fondu.

La tête de soudage pénètre dans le chanfrein et peut avancer en étant guidée par lui, les deux moyens de fusion et de soudage restant à des positions correctes et le bain fondu étant protégé de tous côtés de l'atmosphère extérieure soit par la matière des pièces à unir et de la tête de soudage, soit par le gaz de protection occupant leurs interstices.

Avantageusement, l'installation comprend, disposée sur la tête, une table micrométrique de réglage de position d'un tête optique laser au-dessus du perçage centrale qui est aligné avec le laser, ce qui permet de régler la position de la tache focale du faisceau dans un chanfrein et donc l'emplacement du bain fondu.

Avantageusement encore les moyens de soudage laser sont choisis parmi ceux utilisant une source du type, YAG ou CO₂, et les moyens de soudage à l'arc électrique sont choisis par ceux du type MIG ou MAG.

L'invention sera maintenant décrite plus complètement et dans tous ses aspects au moyen des figures suivantes :
- la figure 1 est une vue générale de l'invention,
- la figure 2 est une vue en coupe de la tête.

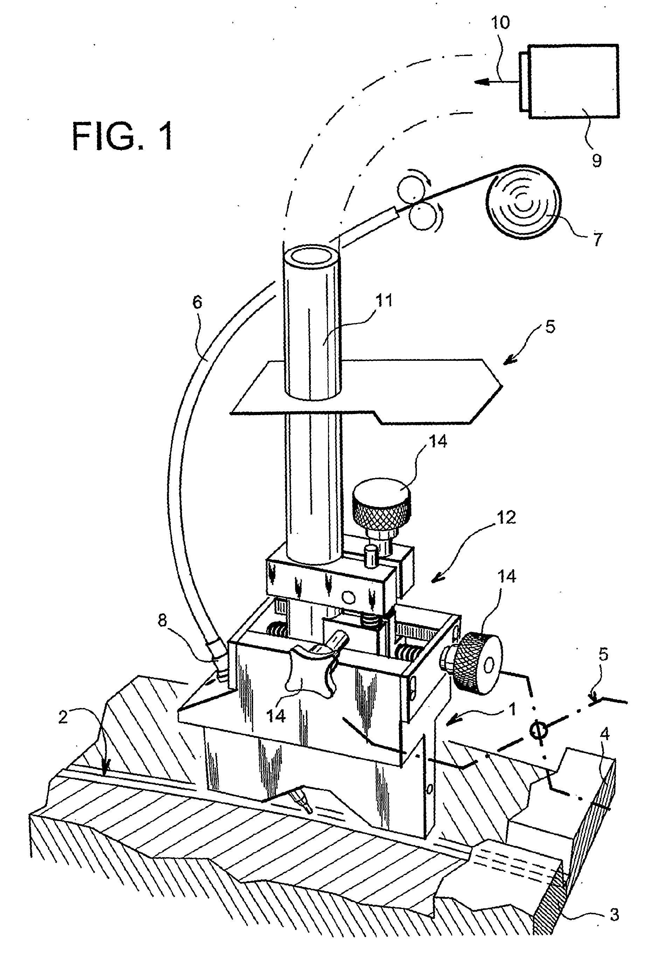

La figure 1 illustre d'abord les éléments essentiels de l'invention : une tête 1 se déplace dans un chanfrein 2 établi entre deux pièces 3 et 4 à souder, représentées partiellement en arraché pour des raisons de clarté. La tête 1 est déplacée dans le chanfrein 2 par un bras de robot 5 ou un autre moyen ; elle est de forme allongée dans des directions de longueur et de profondeur du chanfrein 2, mais étroite dans la direction latérale, pour pouvoir y pénétrer. Le métal d'apport est fourni par un fil 6 déroulé d'une bobine 7 et guidé dans une électrode 8 tubulaire, polarisée par rapport aux pièces 3 et 4 de manière qu'un arc électrique puisse être formé entre elles et le bout du fil 6 selon les modalités usuelles des techniques MIG et MAG de soudage. Enfin, un laser 9 émet son faisceau 10 dans une tête optique 11. Une table micrométrique 12 de réglage est prévue sur la tête 1 pour déplacer la position focale du laser par rapport au reste de la tête et ajuster ainsi les conditions de soudage.

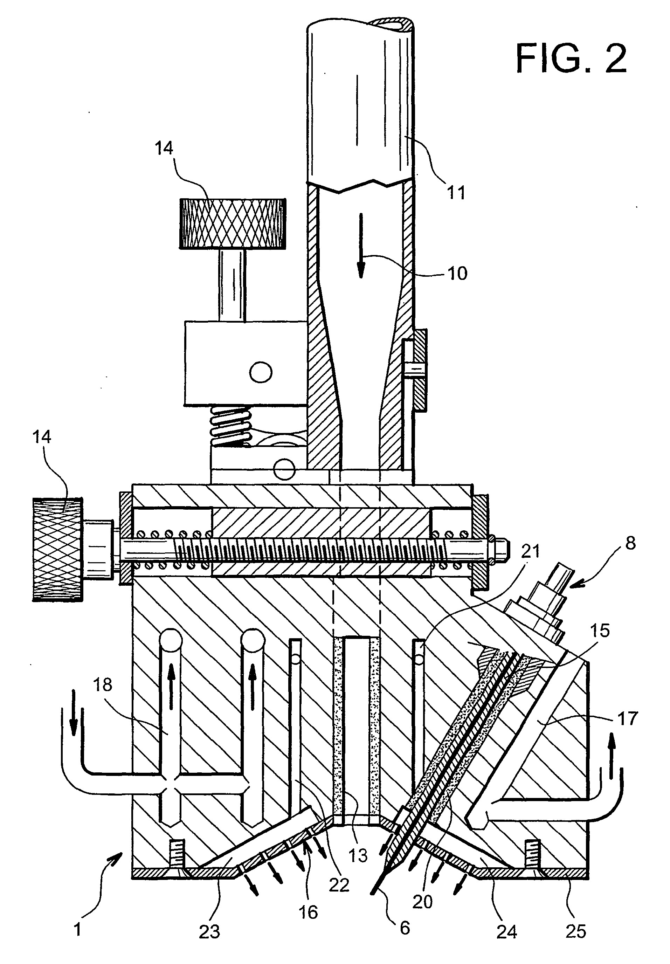

Se reportant à la figure 2, on voit que la tête 1 est traversée par un perçage central 13 s'étendant en direction verticale, ou de profondeur du chanfrein 2, et aligné avec la tête optique 11 et le faisceau 10 du laser, dont les positions peuvent cependant être ajustées dans les trois directions principales en agissant sur trois molettes 14 de la tache 12, qui déplacent donc le faisceau 10 par rapport à la tête 1. Cela permet d'ajuster la position de la tache focale du faisceau 10 et donc la répartition de la chaleur sur les pièces 3 et 4 et l'étendue du bain fondu.

L'électrode 8 est tubulaire pour guider le fil 6 et placée dans un manchon 20 isolant qui est engagé dans un autre perçage 15 traversant la tête 1 dans une direction voisine de celle du premier perçage 13 mais en convergeant vers lui sous la tête 1, de sorte que le bout du fil 6 arrive sensiblement dans l'axe du faisceau 10 du laser. Le bain fondu s'étend à cet endroit, sous le centre de la tête 1, dans un creux 16 qui y est réalisé. L'électrode 8 s'étend jusque dans le creux 16 pour arriver à quelques centimètres du fond du chanfrein.

La tête 1 est encore traversée par deux réseaux de conduites 17 et 18 de fluide de refroidissement respectivement à l'avant et à l'arrière de la tête 1; de part et d'autre des perçages 13 et 15 ; et par deux conduits 21 et 22 d'éjection de gaz de protection du bain fondu qui finissent sur des chambres respectives 23 et 24 creusées sous la tête 1 aux flancs inclinés du creux 16, de part et d'autre du bout du fil 6 et du faisceau 10. Une bonne protection du bain fondu est ainsi obtenue. Une plaque 25 fixée sous la tête 1 est ajourée devant les chambres 23 et 24 pour assurer une bonne répartition du gaz. Le gaz soufflé occupe tout le volume du creux 16 ; les chambres 23 et 24 sont assez allongées en direction longitudinale pour couvrir toute l'étendue du bain fondu. Le gaz peut fuir latéralement l'avant à l'avant de la tête 1 et vers l'arrière à l'arrière, en passant par-dessous les extrémités de la plaque 25, qui sont parallèles au fond du chanfrein et à peu de distance de lui. L'écoulement d'air s'étend ainsi certainement jusqu'aux extrémités du bain fondu. Il peut être renforcé si du gaz est encore soufflé par un conduit central, comme le perçage central 13, pour apporter un débit supplémentaire et empêcher aussi que du gaz ne sorte par ledit perçage central 13 et échappe à l'écoulement protecteur par fuite autour de la tête 1. Il devient possible de souder en déplaçant la tête 1 indifféremment dans un sens ou dans l'autre grâce à la symétrie de sa structure autour d'un plan longitudinal médian.

Les conduits 17 et 18 de fluide de refroidissement sont creusées dans des extrémités longitudinales massives de la tête 1, de part et d'autre du creux 16 et au-dessus des extrémités de la plaque 25. Ils peuvent donc passer très près du bas de la tête 1, où l'échauffement est le plus intense, et posséder une longueur de circulation apte à assurer une évacuation importante de la chaleur.

## Revendications

1. Installation de soudage pour réaliser un joint à chanfrein comprenant un laser (9) émettant un faisceau (10), un film de métal d'apport et une électrode en guide-fil, comprenant une tête apte à pénétrer dans le chanfrein, cette tête étant allongée dans les directions longitudinale et de profondeur du chanfrein et étroite dans une direction transversale du chanfrein, cette tête comprenant deux perçages centraux (13, 15) traversant ladite tête essentiellement dans la direction de profondeur et convergeant l'un vers l'autre sous la tête, l'un des perçages étant aligné, durant l'utilisation de l'installation, avec le faisceau délivré par le laser et l'autre des perçages recevant l'électrode de sorte que le fil arrive sensiblement dans l'axe du faisceau laser, et **caractérisée par** deux conduits d'éjection (21, 22) d'un gaz de protection traversant la tête et aboutissant dans des chambres (23, 24), ces chambres étant situées devant et derrière les perçages centraux dans la direction longitudinale et étant assez allongées dans cette direction pour couvrir toute l'étendue du bain fondu.

2. Installation de soudage suivant la revendication 1, **caractérisée en ce qu'**elle comprend, disposée sur la tête, une table micrométrique (12) de réglage de position d'une tête optique (11) du laser au-dessus du perçage central qui est aligné avec le laser.

3. Installation de soudage suivant l'une quelconque des revendications 1 ou 2, **caractérisée en ce que** la tête comprend un creux (16) central dans lequel les perçages centraux débouchent.

4. Installation de soudage suivant l'une quelconque des revendications 1 à 3, **caractérisée en ce que** la tête est traversée de deux réseaux de canaux de refroidissement (17, 18) devant et derrière les perçages centraux.

5. Installation suivant l'une quelconque des revendications 1 à 4, **caractérisée en ce que** les moyens de soudage laser sont choisis parmi ceux utilisant une source de type, YAG ou CO₂, et les moyens de soudage à l'arc électrique sont choisis parmi ceux du type MIG ou MAG.

## Claims

1. Welding installation for making a chamfered joint comprising a laser (9) emitting a beam (10), a filler metal film and a wire guide electrode, comprising a head able to penetrate the chamfer, said head being elongated in the longitudinal and depth directions of the chamfer and narrow in a direction at right angles to the chamfer, said head incorporating two central openings (13, 15) traversing said head essentially in the depth direction and converging beneath the head, one of the openings being aligned during the use of the installation with the beam supplied by the laser and the other opening receives the electrode in such a way that the wire arrives essentially in the axis of the laser beam and **characterized by** two ducts (21, 22) for ejecting a protection gas traversing the head and leading into chambers (23, 24), which are located upstream and downstream of the central openings in the longitudinal direction and which are also elongated in said direction in order to cover the entire molten bath.

2. Welding installation according to claim 1, **characterized in that** it comprises a micrometric table (12), arranged on the head, for adjusting the position of a laser optical head (11) above the central drilling that is aligned with the laser.

3. Welding installation according to any one of claims 1 or 2, **characterized in that** the head comprises a central recess (16) in which the central drillings end up.

4. Welding installation according to any one of claims 1 to 3, **characterized in that** two cooling pipe networks (17, 18) pass through the head in front and behind the central drillings.

5. Installation according to any one of claims 1 to 4, **characterized in that** the laser welding means are chosen from among means using a YAG or CO₂ type source, and electric arc welding means are chosen from among MIG or MAG type means.

## Patentansprüche

1. Schweißvorrichtung zur Realisierung einer Schweißstoßverbindung, mit einem einen Strahl (10) emittierenden Laser (9), einem Zusatzwerkstoffdraht und einer Drahtführungselektrode, einen Kopf umfassend, der in den Schweißstoß eindringen kann, wobei dieser Kopf in der Längs- und der Tiefenrichtung des Schweißstoßes länglich ist und in einer transversalen Richtung des Schweißstoßes schmal ist, und dieser Kopf zwei zentrale Bohrungen (13, 15) umfasst, die den Kopf im Wesentlichen in der Tiefenrichtung so durchqueren, dass sie bzw. dass ihre Achsen unter dem Kopf konvergieren, wobei eine der Bohrungen während der Benutzung der Vorrichtung auf den durch den Laser gelieferten Strahl ausgerichtet ist und die andere Bohrung die Elektrode aufnimmt, so dass der Draht im Wesentlichen in der Achse des Laserstrahls ankommt,
und **gekennzeichnet durch** zwei Ausstoßleitungen (21, 22) eines Schutzgases, die den Kopf durchqueren und in Kammern (23, 24) enden, wobei sich diese Kammern in Längsrichtung vor und hinter den zentralen Bohrungen befinden und in dieser Richtung ausreichend langgestreckt sind, um die gesamte Ausdehnung des Schmelzbades abzudecken.

2. Schweißvorrichtung nach Anspruch 1, **dadurch gekennzeichnet, dass** sie einen auf dem Kopf angeordneten Mikrometertisch (12) zur Positionseinstellung eines optischen Kopfes (11) des Lasers über der mit dem Laser ausgerichteten zentralen Bohrung umfasst.

3. Schweißvorrichtung nach einem der Ansprüche 1 und 2, **dadurch gekennzeichnet, dass** der Kopf einen zentralen Hohlraum (16) umfasst, in dem die zentralen Bohrungen münden.

4. Schweißvorrichtung nach einem der Ansprüche 1 bis 3, **dadurch gekennzeichnet, dass** der Kopf von zwei Netzen von Kühlkanälen (17, 18) durchquert wird, vor und hinter den zentralen Bohrungen.

5. Schweißvorrichtung nach einem der Ansprüche 1 bis 4, **dadurch gekennzeichnet, dass** die Laserschweißeinrichtungen unter denjenigen ausgewählt werden, die eine Quelle des YAG- oder CO₂-Typs benutzen, und die Lichtbogenschweißeinrichtungen unter denen des MIG- oder MAG-Typs ausgewählt werden.
